# EUROPÄISCHE PATENTSCHRIFT

(11) **EP 3 077 256 B1**
(45) Veröffentlichungstag und Bekanntmachung des Hinweises auf die Patenterteilung: **13.12.2017**
(21) Anmeldenummer: 14730735.9
(22) Anmeldetag: 05.05.2014
(51) Int. Cl.: B60S 1/08

(54) **BELEUCHTUNG ZUR DETEKTION VON REGENTROPFEN AUF EINER SCHEIBE MITTELS EINER KAMERA**
ILLUMINATION FOR DETECTING RAINDROPS ON A PANE BY MEANS OF A CAMERA
ÉCLAIRAGE DESTINÉ À DÉTECTER DES GOUTTES DE PLUIE SUR UNE VITRE AU MOYEN D'UNE CAMÉRA

(30) Priorität: 06.12.2013 DE 102013225156
(43) Veröffentlichungstag der Anmeldung: 12.10.2016
(73) Patentinhaber: Conti Temic Microelectronic GmbH, 90411 Nürnberg (DE)
(72) Erfinder: BIX, Stefan, 88255 Baindt (DE)
(86) Internationale Anmeldenummer: PCT/DE2014/200195
(87) Internationale Veröffentlichungsnummer: WO 2015/081933

(56) Entgegenhaltungen:
- WO-A1-2012/092911
- JP-A- 2010 223 685
- US-B2- 7 259 367

## Beschreibung

Die Erfindung betrifft eine Vorrichtung zur Erkennung von Regen auf einer Scheibe mittels einer Beleuchtung und einer Kamera.

In der US 7,259,367 B2 wird mittels einer Kamera eine Regensensierung vorgeschlagen, die eine großflächige Beleuchtung des Durchtrittsfensters des Kameraöffnungswinkels mit der Scheibe durch eine Infrarotdiode vorsieht. Die Kamera ist nahezu auf unendlich fokussiert und damit gleichzeitig für Fahrerassistenzapplikationen nutzbar. Wegen der Abbildung auf den Fernbereich sind Regentropfen nur als Störungen im Bild bemerkbar, die durch aufwendige Differenzmessungen der mit in Synchronisation des Pixeltaktes gepulsten oder modulierten Infrarotlichtes aufgenommen Bildern detektiert werden.

In der WO 2012/092911 A1 werden eine Vorrichtung und ein Verfahren zur Erkennung von Regen beschrieben. Eine Kamera ist hinter einer Scheibe angeordnet, insbesondere im Inneren eines Fahrzeugs hinter einer Windschutzscheibe, und auf einen Fernbereich fokussiert, der vor der Scheibe liegt. Eine Beleuchtungsquelle zur Erzeugung mindestens eines auf die Scheibe gerichteten Lichtstrahls richtet den mindestens einen Lichtstrahl derart auf die Scheibe, dass mindestens ein von der Außenseite der Scheibe reflektierter Strahl als äußerer Lichtreflex bzw. Außenreflex auf die Kamera auftrifft. Die Lichtmenge des mindestens einen auf die Kamera auftreffenden Strahls bzw. Lichtreflexes kann von der Kamera gemessen werden kann. Als Beleuchtungsquelle sind eine oder mehrere Leuchtdioden optional mit einem Lichtleiter oder ein Lichtband angegeben. Wenn der Öffnungswinkel der Beleuchtung groß genug ist, kann die Beleuchtungsquelle auch innerhalb der Kamera, z.B. auf einer Platine des Kameraaufbaus platziert werden.

Die Empfindlichkeit der Regenerkennung hängt hierbei wesentlich von der Ausgestaltung der Beleuchtung ab. Dokument JP 2010 223 685 A offenbart eine Vorrichtung zur Erkennung von Regen auf einer Scheibe umfassend eine Kamera gemäß das erste Teil des Anspruchs 1.

Aufgabe der vorliegenden Erfindung ist es, eine optimierte Beleuchtung für eine kamerabasierte Regenerkennung anzugeben, die eine hohe Empfindlichkeit gewährleistet.

Die Erfindung basiert auf den folgenden Grundüberlegungen: Die Empfindlichkeit der Regenerkennung hängt von der Beleuchtungsintensität und der Fläche des Detektionsbereichs auf der Windschutzscheibe ab. Mit LEDs als Beleuchtungsquelle wird ein Bereich abgedeckt, der dem an der Windschutzscheibe gespiegelten Bild der LEDs entspricht. Dieser abgedeckte Bereich reicht häufig nicht für eine effiziente Regenerkennung aus. Die Verwendung eines Lichtleiters geht zudem mit einem Verlust der von der Beleuchtungsquelle emittierten Lichtintensität einher. Eine erfindungsgemäße Vorrichtung zur Erkennung von Regen auf einer Scheibe umfasst eine Kamera und eine elektrisch ansteuerbare, aktiv Licht emittierende Folie als Beleuchtungsquelle. Das von der Folie emittierte Licht tritt als Lichtfläche aus. Die Folie als Beleuchtungsquelle erzeugt vorteilhaft eine gleichmäßige flächige Beleuchtung (Lichtfläche) eines Bereichs der Scheibe, wenn sie entsprechend elektrisch angesteuert wird. Die Kamera und die Folie sind derart ausgebildet und angeordnet, dass die Kamera ein Signal vom Licht bzw. eine Abbildung der Lichtfläche erfassen kann, das die Folie emittiert, auf die Scheibe trifft und von der Scheibe reflektiert wird. Insbesondere korreliert dabei das von der Kamera detektierte Signal bzw. die Lichtfläche(n) mit an der Scheibeninnen- bzw. -außenseite und/oder am Regentropfen reflektierten bzw. gestreuten Licht, das von der Folie emittiert wird.

Die Kamera umfasst bevorzugt einen Bildsensor, z.B. einen CCD- oder CMOS-Sensor, und ein Objektiv bzw. Abbildungssystem zur Fokussierung von elektromagnetischer Strahlung aus einem oder mehreren Bereichen auf den Bildsensor.

Bevorzugt wird Regen auf der Außenseite der Scheibe erkannt, indem die Kamera hinter der Scheibe angeordnet und auf einen Fernbereich vor der Scheibe fokussiert wird.

Die erfindungsgemäße Vorrichtung bietet den Vorteil, dass eine kostengünstige Beleuchtung verwendet wird, die eine robuste und zuverlässige Erkennung von Regen ermöglicht. Sowohl die Material- als auch die Fertigungskosten für eine erfindungsgemäße Vorrichtung sind gering gegenüber bekannten kamerabasierten Vorrichtungen mit vergleichbar vielseitigen Anwendungsgebieten und vergleichbarer Wirksamkeit bzw. Empfindlichkeit der Regendetektion.
Vorteilhaft sind die Kamera und die aktiv Licht emittierende Folie derart ausgebildet und angeordnet, dass die Kamera ein erstes Spiegelbild der an der Innenseite der Scheibe reflektierten Lichtfläche und eine zweites Spiegelbild der an der Außenseite der Scheibe reflektierten Lichtfläche erfassen kann. Bei der Auslegung der Elemente der Vorrichtung sollten insbesondere Eigenschaften der Scheibe, wie z.B. Neigungswinkel, Brechungsindex und Dicke, berücksichtigt werden.

Bevorzugt sind dabei die Kamera und die aktiv Licht emittierende Foliederart ausgebildet und angeordnet, dass das erste und das zweite von der Kamera erfassbare Spiegelbild einander nicht überlappen, sie können dabei aneinander angrenzen. Das erste Spiegelbild ist unabhängig vom Vorliegen von Regentropfen im beleuchteten Bereich der Scheibe, während das zweite Spiegelbild sich bei vorliegenden Regentropfen im beleuchteten Bereich der Scheibe verändert bzw. abschwächt, da Teile der Lichtintensität durch die Regentropfen aus der Scheibe ausgekoppelt werden und nicht zur Kamera reflektiert werden.

Gemäß einer vorteilhaften Ausführungsform umfasst die Folie mindestens eine organische Leuchtdiode (OLED) zur aktiven Emission von Licht. Organische Leuchtdioden sind aus mehreren organischen Schichten aufgebaut. OLED umfassen dabei organische halbleitende Materialien, weisen eine Anode und eine Kathode auf und können auf biegbaren Kunststofffolien angeordnet sein. OLED bieten den Vorteil, dass sie drucktechnisch und somit vergleichsweise kostengünstig hergestellt werden können und mit Gleichspannung elektrisch angesteuert werden. Dadurch ist eine Begrenzung oder eine Anpassung der Lichtfläche möglich.

In einer bevorzugten Ausführungsform ist die Folie eine Elektrolumineszenzfolie. Eine Elektrolumineszenzfolie wird auch als Kondensator-Leuchtfolie (verkürzt auch Leucht- oder Lichtfolie) bezeichnet, da sie vom Aufbau her einem Plattenkondensator ähnelt. Das elektrolumineszente Material liegt elektrisch isoliert zwischen zwei Elektroden. Durch Anlegen einer elektrischen Wechselspannung an die Elektroden wird das elektrolumineszente Material zur Emission von Licht angeregt. Die leuchtende Elektrolumineszenzfolie eignet sich als Beleuchtungsquelle zur Regenerkennung. Elektrolumineszenfolien bieten den Vorteil, dass sie dünner und weniger komplex aufgebaut sind als OLED.

Vorteilhaft weist die Folie eine Mehrzahl von einzeln elektrisch ansteuerbaren, Licht emittierenden Bereichen auf. Beispielsweise kann die Folie matrixförmig aus einzeln elektrisch ansteuerbaren, Licht emittierenden Zellen aufgebaut sein. Durch eine entsprechende elektrische Ansteuerung kann so die Form bzw. Größe der Lichtfläche variiert bzw. angepasst werden. Vorteilhaft ist eine aus mehreren rechteckigen bzw. rahmenförmigen Zellen aufgebaute Folie, wodurch die Größe einer rechteckigen Beleuchtungsfläche variiert werden kann. Das eröffnet eine Möglichkeit sicherzustellen, dass das erste und das zweite von der Kamera erfassbare Spiegelbild einander nicht überlappen.

Bevorzugt umfasst die Vorrichtung ein Beleuchtungssteuergerät zur elektrischen Ansteuerung der Folie. Dadurch kann insbesondere bei einer Mehrzahl von einzeln elektrisch ansteuerbaren, Licht emittierenden Bereichen bzw. Zellen auf der Folie eine angepasste Lichtfläche erzeugt werden.

Vorteilhaft ist die Kamera mittels eines Objektivs auf einen Fernbereich fokussiert, so dass das oder die Spiegelbilder der Lichtfläche unscharf von der Kamera abgebildet wird oder werden. Dadurch kann die Kamera als Multifunktionssensor für eine oder mehrere weitere Fahrerassistenzfunktionen eingesetzt werden, die auf einer Auswertung des fokussiert abgebildeten Fernbereichs beruhen, wie z.B. eine Spurverlassenswarnung (LDW, Lane Departure Warning), eine Spurhalteunterstützung (LKA/LKS, Lane Keeping Assistance/System), eine Verkehrszeichenerkennung (TSR, Traffic Sign Recognition), eine automatische Fernlichtsteuerung (IHC, Intelligent Headlamp Control), eine Kollisionswarnung (FCW, Forward Collision Warning), eine automatische Längsregelung (ACC, Adaptive Cruise Control), eine Einparkunterstützung und automatische Notbrems- oder Notlenksysteme (EBA, Emergency Brake Assist oder ESA, Emergency Steering Assist).

Gemäß einer bevorzugten Ausführungsform ist die Foliein einer Aussparung eines Gehäuses angeordnet. Das Gehäuse kann insbesondere das Gehäuse der Kamera, der Kameraelektronik oder des Beleuchtungssteuergeräts sein. Das Gehäuse kann aus Metall gefertigt sein.
Vorteilhaft kann das Beleuchtungssteuergerät auf einer Leiterplatte angeordnet sein, wobei die Leiterplatte Bestandteil oder Träger der Kameraelektronik ist. Die Leiterplatte kann zudem innerhalb des Gehäuses angeordnet sein.

Vorteilhaft umfasst die Kamera einen Sichttrichter bzw. eine Sichtblende bzw. eine Streulichtblende, welche insbesondere das Sichtfeld der Kamera (nach unten) begrenzt und idealerweise Stör- und Streulichtreflexe minimiert. Die Folie ist am Sichttrichter angeordnet oder in den Sichttrichter integriert. Um eine kompakte Bauweise der Kamera mit integrierter Beleuchtung zu erzielen, kann die Folie derart in den Sichttrichter integriert sein, dass sie in diesem Bereich den Sichttrichter "ersetzt". Alternativ kann der Sichttrichter einen Bereich aus lichtdurchlässigem Material aufweisen und die Folie kann insbesondere darauf angeordnet sein.

Im Folgenden wird die Erfindung anhand von Figuren und Ausführungsbeispielen näher erläutert.

Es zeigen:
Fig. 1 schematisch das Grundprinzip einer möglichen Anordnung von Beleuchtungsquelle, Scheibe und Kamera zur Regenerkennung (im Längsschnitt) und
Fig. 2 eine Anordnung von einer aktiv Licht emittierenden Folie, Scheibe und Kamera zur verbesserten Regenerkennung.

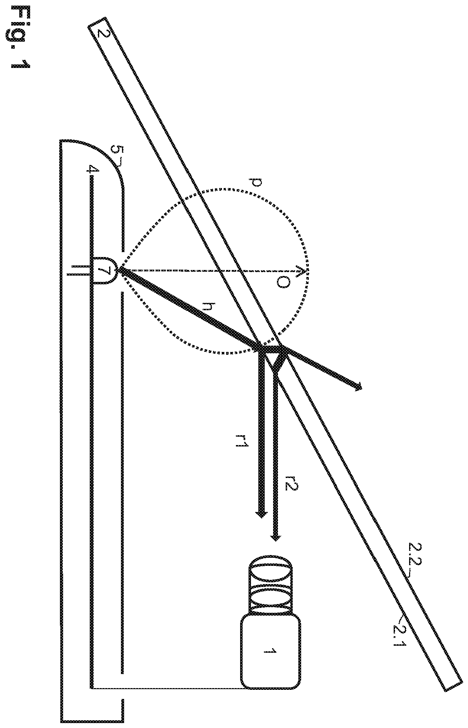

Fig. 1 zeigt im Längsschnitt eine auf den Fernbereich fokussierte Kamera mitsamt Objektiv (1) und einer LED-Beleuchtungsquelle (7), die Licht (o, p, h) auf eine Windschutzscheibe (2) eines Fahrzeugs ausstrahlt, grundsätzlich vergleichbar mit einem Ausführungsbeispiel der WO 2012/092911 A1. Die LED-Beleuchtungsquelle (7) emittiert Licht in einer bestimmten Verteilung (p) hier mit einem Abstrahlwinkel bzw. einer Halbwertsbreite (FWHM) der Abstrahlwinkelverteilung von 120° und einer maximalen Intensität in der zentralen Abstrahlrichtung (o). Der Öffnungswinkel der Beleuchtung ist so groß, dass von einer Strahlrichtung (h) an der Innen- (2.1) und Außenseite (2.2) der Scheibe reflektierte Strahlen als zwei räumlich getrennte Strahlen (r1, r2) auf das Objektiv bzw. die Kamera (1) auftreffen. Das meiste von der LED-Beleuchtungsquelle (7) emittierte Licht (Richtung o) wird jedoch von der Windschutzscheibe (2) nicht zur Kamera (1) reflektiert und geht für die Regenerkennung verloren. Wegen der Fokussierung auf den Fernbereich wird die Umrandung der Strahlenbündel nur unscharf von der Kamera (1) abgebildet. Beide reflektierten Strahlen (r1, r2) sind ausreichend getrennt und ihre jeweiligen Lichtreflexe sind mit der Kamera (1) messbar.

Der an der Luft-Scheibe-Grenzfläche (bzw. Scheibeninnenseite (2.1)) reflektierte Anteil (r1) des Lichtstrahls (h) kann als Referenzstrahl dienen. Vom Anteil, der in die Scheibe transmittiert wird, dient der Anteil als Messstrahl (r2), der an der Scheibe-Luft/Regentropfen-Grenzfläche (bzw. Scheibenaußenseite (2.2)) reflektiert wird und auf die Kamera (1) trifft. Nicht dargestellt ist der Anteil des Strahls, der mehrfach innerhalb der Scheibe (2) reflektiert wird (an der Innenseite (2.1) Scheibe-Luft, nachdem er an der Außenseite (2.2) Scheibe-Regentropfen reflektiert wurde). Die dargestellten Strahlenverläufe (h, r1, r2) und Lichtverteilungen (o, p) sind schematisch.

Wenn bei Regen die Außenseite (2.2) der Windschutzscheibe (2) benetzt ist, wird ein Großteil des durch die Innenseite (2.1) in die Scheibe transmittierten Lichts ausgekoppelt, so dass der reflektierte Anteil (r2) schwächer ist als er es bei einer trockenen Scheibe ist (nicht dargestellt) . Der von der Innenseite (2.1) reflektierte Strahl (r1) ist von einer Benetzung der Scheibenaußenseite (2.2) unbeeinflusst.

Durch den Vergleich der gemessenen Lichtreflexe beider Strahlen (r1 zu r2) kann so leicht das im Regenfall verminderte Signal gemessen werden und ein Scheibenwischer entsprechend angesteuert werden.

Die LED-Beleuchtungsquelle (7) umfasst vorzugsweise mehrere in einer Reihe angeordnete LEDs mit einem weiten Abstrahlwinkel, von denen in Fig. 1 nur eine dargestellt ist. Die weiteren LEDs können insbesondere senkrecht zu der in Fig. 1 dargestellten Ebene aufgereiht sein. Eine Mehrzahl von LEDs ist vorteilhaft, um eine für die Regenerkennung ausreichende Beleuchtung zu erzielen. Die LEDs sind insbesondere als nach oben abstrahlende SMD-Bauteile auf einer Leiterplatte (4) angeordnet. Die Leiterplatte (4) kann vorteilhaft eine PCB (printed circuit board) der Kameraelektronik sein, welche zum Schutz vor Schmutz, Feuchtigkeit und elektromagnetischen Störungen innerhalb eines Gehäuses (5) angeordnet ist. Die Verbindungslinie zwischen der Kamera (1) und der Leiterplatte (4) in Fig. 1 soll nur veranschaulichen, dass die Leiterplatte (5) Bestandteil der Kameraelektronik ist.

Der von den LEDs (7) beleuchtete Bereich der Windschutzscheibe (2), der zur Regenerkennung genutzt werden kann, ist sehr klein, z.B. in der Größenordnung weniger mm². Nur in diesem (Detektions-)Bereich werden Regentropfen, die sich auf der Außenseite der Scheibe befinden von LEDs beleuchtet. Die Empfindlichkeit der Regenerkennung hängt von der Lichtintensität und der Größe des Detektionsbereichs auf der Windschutzscheibe ab. Mit LEDs als Beleuchtungsquelle (7) entspricht der Detektionsbereich dem Spiegelbild, welches durch Reflexion der LED-Emissionsoberflächen an der Scheibe entsteht. Die dadurch abgedeckte (Detektions-)Fläche ist nicht ausreichend für eine wirksame Regenerkennung.

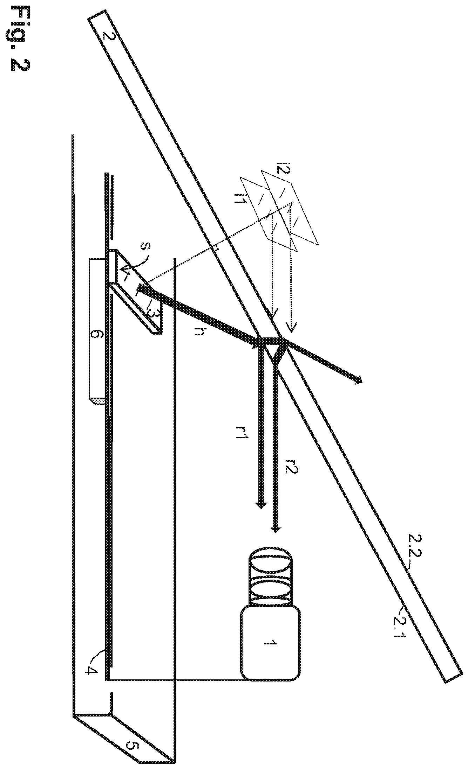

Fig. 2 zeigt eine Anordnung mit einer aktiv Licht emittierenden Folie (3) als Beleuchtungsquelle. Die Folie ist elektrisch ansteuerbar und kann insbesondere eine oder mehrere organische Leuchtdioden (OLED) umfassen. Die OLED-Folie (3) leuchtet, wenn sie mit einer geeigneten Gleichspannung von einem Beleuchtungssteuergerät (6) angesteuert wird. Das von der OLED-Folie (3) emittierte Licht (h) führt zu einer gleichmäßig beleuchteten Folienoberfläche (s) (Lichtfläche).

Die Spiegel- bzw. virtuellen Bilder von der Lichtfläche (s) erzeugt von der Scheibeninnenseite (i1) bzw. -außenseite (i2) sind für die Kamera (1) sichtbar.
Abhängig von der Größe der beleuchteten Fläche (s), Beschaffenheit (Brechungsindex und Dicke) der Windschutzscheibe, den Winkeln zwischen der beleuchteten Fläche (s) und der Windschutzscheibe (2) sowie zwischen der Windschutzscheibe (2) und der optischen Achse der Kamera (1) kann es zu einer Überlappung von erstem (i1) und zweitem (i2) Spiegelbild im Kamerabild kommen. Dieser Überlappungsbereich kann nicht bzw. nur schwierig zur wirksamen Regenerkennung genutzt werden. Vorzugsweise sollte eine Überlappung von erstem (i1) und zweitem (i2) Spiegelbild im Kamerabild vermieden werden.

Eine mögliche Maßnahme zur Vermeidung dieser Überlappung stellt das Anpassen der Lichtfläche (s) dar. Dies ist möglich, wenn die Folie (3) eine Mehrzahl von einzeln elektrisch ansteuerbaren, Licht (h) emittierenden Bereichen aufweist. Dazu kann die Folie (3) matrixförmig aus einzeln elektrisch ansteuerbaren, Licht (h) emittierenden Zellen aufgebaut sein. Durch eine entsprechende elektrische Ansteuerung der einzelnen Zellen mittels des Beleuchtungssteuergeräts (6) kann so die Form bzw. Größe der Lichtfläche (s) angepasst werden. Dadurch kann also die Lichtfläche so begrenzt warden, dass es keine derartige Überlappung gibt.

Um die Vorrichtung für verschiedene Fahrzeuge mit verschiedenen Neigungswinkeln der Windschutzscheibe (2) anzupassen, kann die Folie (3) in einem vorgegebenen festen Winkel und optional auch einem festen vorgegebenen Abstand zur jeweiligen Windschutzscheibe (2) angeordnet werden. Dazu kann insbesondere die Folie (3) mit einem entsprechenden Kippwinkel beaufschlagt angeordnet sein. Auch eine gekrümmte Anordnung der Folie (3) ist möglich, wodurch geringe Unterschiede des Neigungswinkels bei Windschutzscheiben (2) hinreichend kompensiert werden können. Dadurch ist die Abdeckung bzw. Beleuchtung eines gleichartigen Detektionsbereichs auf der jeweiligen Windschutzscheibe (2) für unterschiedliche Windschutzscheibenneigungen in unterschiedlichen Fahrzeugtypen möglich.

### Bezugszeichenliste

- 1: Kamera
- 2: Windschutzscheibe
- 2.1: Innenseite der Windschutzscheibe
- 2.2: Außenseite der Windschutzscheibe
- 3: aktiv Licht emittierende Folie als Beleuchtungsquelle
- 4: Leiterplatte
- 5: Gehäuse
- 6: Beleuchtungssteuergerät
- 7: LED-Beleuchtungsquelle

- p: Verteilung des von der Beleuchtungsquelle emittierten Lichts
- o: Emissionsrichtung mit der maximalen Intensität der Beleuchtungsquelle
- h: Beleuchtungsstrahlrichtung, die von der Kamera erfasst wird
- r1: Anteil von h, der an der Scheibeninnenseite reflektiert und von der Kamera erfasst wird
- r2: Anteil von h, der an der Scheibenaußenseite reflektiert wird und von der Kamera erfasst wird
- s: Lichtfläche
- i1: Spiegelbild der an der Scheibeninnenseite reflektierten Lichtfläche
- i2: Spiegelbild der an der Scheibenaußenseite reflektierten Lichtfläche

## Patentansprüche

1. Vorrichtung zur Erkennung von Regen auf einer Scheibe (2) umfassend
- eine Kamera (1),
**dadurch gekennzeichnet, dass** die Vorrichtung
- eine elektrisch ansteuerbare, aktiv Licht (h) emittierende Folie (3) hat, und
- wobei das von der Folie (3) emittierte Licht (h) als Lichtfläche (s) austritt, und
- wobei die Kamera (1) und die Folie (3) derart ausgebildet und angeordnet sind, dass die Kamera ein Signal vom Licht (r1, r2) erfassen kann, das die Folie (3) emittiert, auf die Scheibe (2) trifft und von der Scheibe reflektiert wird.

2. Vorrichtung nach Anspruch 1, wobei die Kamera ein erstes Spiegelbild der an der Innenseite der Scheibe (2.1) reflektierten Lichtfläche (s) und eine zweites Spiegelbild (i2) der an der Außenseite der Scheibe (2.2) reflektierten Lichtfläche (s) erfassen kann.

3. Vorrichtung nach Anspruch 2, wobei das erste (i1) und das zweite von der Kamera (1) erfassbare Spiegelbild (i2) einander nicht überlappen.

4. Vorrichtung nach einem der vorhergehenden Ansprüche, wobei die Folie (3) eine organische Leuchtdiode umfasst.

5. Vorrichtung nach einem der Ansprüche 1 bis 3, wobei die Folie (3) eine Elektrolumineszenzfolie ist.

6. Vorrichtung nach einem der vorhergehenden Ansprüche, wobei die Folie (3) eine Mehrzahl von einzeln elektrisch ansteuerbaren, Licht (h) emittierenden Bereichen aufweist.

7. Vorrichtung nach einem der vorhergehenden Ansprüche, wobei die Vorrichtung ein Beleuchtungssteuergerät (6) zur elektrischen Ansteuerung der Folie (3) umfasst.

8. Vorrichtung nach einem der vorhergehenden Ansprüche, wobei die Kamera (1) mittels eines Objektivs auf einen Fernbereich fokussiert ist, so dass das oder die Spiegelbilder (i1, i2) der Lichtfläche (s) unscharf von der Kamera (1) abgebildet werden.

9. Vorrichtung nach einem der vorhergehenden Ansprüche, wobei die Folie (3) in einer Aussparung eines Gehäuses (5) angeordnet ist.

10. Vorrichtung nach einem der vorhergehenden Ansprüche, wobei die Kamera (1) einen Sichttrichter umfasst und die Folie (3) am Sichttrichter angeordnet oder in den Sichttrichter integriert ist.

## Claims

1. A device for detecting rain on a pane (2), comprising
- a camera (1),
**characterized in that** the device
- has an electrically drivable film (3) that actively emits light (h), and
- wherein the light (h) emitted by the film (3) emerges as a light sheet (s), and
- wherein the camera (1) and the film (3) are designed and arranged in such a way that the camera can detect a signal from the light (r1, r2) which is emitted by the film (3), impinges on the pane (2) and is reflected by the pane.

2. The device according to Claim 1, wherein the camera can detect a first mirror image of the light sheet (s) reflected at the inner face of the pane (2.1) and a second mirror image (i2) of the light sheet (s) reflected at the outer face of the pane (2.2).

3. The device according to Claim 2, wherein the first mirror image (i1) and the second mirror image (i2) which can be detected by the camera (1) do not overlap with one another.

4. The device according to any one of the preceding claims, wherein the film (3) comprises an organic light-emitting diode.

5. The device according to any one of Claims 1 to 3, wherein the film (3) is an electroluminescent film.

6. The device according to any one of the preceding claims, wherein the film (3) has a plurality of individually electrically drivable areas that emit light (h).

7. The device according to any one of the preceding claims, wherein the device comprises a lighting control unit (6) for electrically driving the film (3).

8. The device according to any one of the preceding claims, wherein the camera (1) is focused by a lens onto a remote region, so that the mirror image(s) (i1, i2) of the light sheet (s) are shown as blurred images by the camera (1).

9. The device according to any one of the preceding claims, wherein the film (3) is arranged in a recess of a housing (5).

10. The device according to any one of the preceding claims, wherein the camera (1) comprises a view funnel and the film (3) is arranged on the view funnel or is integrated into the view funnel.

## Revendications

1. Dispositif pour la détection de pluie sur une vitre (2), comprenant
- une caméra (1),
**caractérisé en ce que** le dispositif
- a un film (3) émettant activement de la lumière (h) pouvant être commandé électriquement, et
- la lumière (h) émise par le film (3) sortant comme surface lumineuse (s), et
- la caméra (1) et le film (3) étant formés et disposés de telle sorte que la caméra peut enregistrer un signal de la lumière (r1, r2) que le film (3) émet, qui entre en contact avec la vitre (2) et qui est réfléchie par la vitre.

2. Dispositif selon la revendication 1, la caméra pouvant enregistrer une première image réfléchie de la surface lumineuse (s) réfléchie sur le côté intérieur de la vitre (2.1) et une deuxième image réfléchie (i2) de la surface lumineuse (s) réfléchie sur le côté extérieur de la vitre (2.2).

3. Dispositif selon la revendication 2, les première (i1) et deuxième (i2) images réfléchies pouvant être enregistrées par la caméra (1) ne se chevauchant pas l'une l'autre.

4. Dispositif selon l'une quelconque des revendications précédentes, le film (3) comprenant une diode électroluminescente organique.

5. Dispositif selon l'une des revendications 1 à 3, le film (3) étant un film électroluminescent.

6. Dispositif selon l'une quelconque des revendications précédentes, le film (3) présentant une multiplicité de zones émettant de la lumière (h) pouvant être commandées électriquement individuellement.

7. Dispositif selon l'une quelconque des revendications précédentes, le dispositif comprenant un appareil de commande d'éclairage (6) pour la commande électrique du film (3).

8. Dispositif selon l'une quelconque des revendications précédentes, la caméra (1) focalisant sur une zone à distance au moyen d'un objectif de telle sorte que la ou les images réfléchies (i1, i2) de la surface lumineuse (s) sont représentées floues par la caméra (1).

9. Dispositif selon l'une quelconque des revendications précédentes, le film (3) étant disposé dans un évidement d'un boîtier (5).

10. Dispositif selon l'une quelconque des revendications précédentes,
la caméra (1) comprenant un entonnoir de vue et le film (3) étant disposé sur l'entonnoir de vue ou étant intégré dans l'entonnoir de vue.
